(19) Europäisches Patentamt / European Patent Office / Office européen des brevets

(11) **EP 1 835 292 A1**

(12) **EUROPEAN PATENT APPLICATION**

(43) Date of publication:
**19.09.2007 Bulletin 2007/38**

(51) Int Cl.:
*G01N 35/02* (2006.01)   *G01N 33/48* (2006.01)

(21) Application number: **07004046.4**

(22) Date of filing: **27.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.03.2006 JP 2006068478**

(71) Applicant: **Hitachi High-Technologies Corporation Tokyo 105-8717 (JP)**

(72) Inventors:
• **Soma, Kunihiko**
  **Hitachinaka-shi**
  **Ibaraki 312-8504 (JP)**
• **Kawase, Kazumitsu**
  **Ichinomiya-shi**
  **Aichi (JP)**

(74) Representative: **Strehl Schübel-Hopf & Partner**
  **Maximilianstrasse 54**
  **80538 München (DE)**

(54) **Automatic analyzer**

(57)    The present invention provides an automatic analyzer making it possible to reduce the cost for serum information measurement and prevent a decrease in processing capacity. An automatic analyzer comprises a colorimetric analysis section provided with a reaction vessel to mix a sample with a reagent and a measurement section to measure the color change of the mixture in the reaction vessel; and an electrolyte measurement section to measure the concentrations of electrolytes in a sample, wherein the sample included in the reaction vessel is diluted to be measured in the measurement section of the colorimetric analysis section, and at least one of the degrees of hemolysis, lipemia and icterus in a sample is measured in the electrolyte measurement section.

FIG.1

**Description**

BACKGROUND OF THE INVENTION

1. Field of the Invention

The present invention relates to an electrolyte measuring apparatus and, more particularly, to a measuring method of an automatic analyzer capable of performing colorimetric analysis and electrolyte analysis.

2. Description of the Related Art

An electrolyte measuring apparatus measures the concentrations of specified electrolyte components contained in electrolytic solutions from the human body by using ion-selective electrodes. To determine the concentration of an electrolyte component in a sample, the sample or a solution diluted with a dilute solution is supplied to an ion-selective electrode to measure a voltage level. Then (or prior to the above-mentioned measurement), a reference solution with a known ion concentration is supplied to the ion-selective electrode to measure a voltage level. Based on the two voltage levels, the concentration in the sample is calculated. As a method for supplying a sample or diluted solution to an ion-selective electrode, Patent Document 1(JP-A-6-130070) discloses a system where an electrolyte analysis section is provided in a colorimetric analysis section, a reaction vessel in the colorimetric analysis section is used as a dilution tank for electrolyte measurement, and a thermostatic chamber and agitation mechanism in the colorimetric analysis section are also used for electrolyte measurement. Generally, temperature stability of the measurement solution is important for the electrolyte measurement. The voltage level of the ion-selective electrode varies during measurement depending on the temperature. To secure the data reliability, it is therefore necessary to maintain both sample and reference solution within a range of approximately 37°C $\pm$ 0.5°C. According to the patent document 1, an electrolyte analysis section is provided in a colorimetric analysis section, a reaction vessel in the colorimetric analysis section is used as a dilution tank for electrolyte measurement and a thermostatic chamber and agitation mechanism in the colorimetric analysis section are also used for electrolyte measurement. In this configuration, both sample and reference solution can be kept under satisfactory temperature control in the thermostatic chamber by using the reaction vessel of the colorimetric analysis section.

In colorimetric analysis, a sample such as blood and urine is mixed with a reagent, and the resulting color of the mixture is analyzed with a photometer so as to measure the concentration. However, the analysis result may be influenced by the degree of hemolysis, lipemia or icterus in the sample. Therefore, automatic analyzers are provided with the capability to output an index or qualitative judgment indicating the severity of hemolysis, opacity or icterus in the sample as its serum information. In some cases, such serum information, namely hemolysis, opacity or icterus information is measured by using a reagent of analytical item which does not cause absorption of the visible light spectrum.

SUMMARY OF THE INVENTION

However, this conventional method for measuring the serum information has a drawback that another reagent cost arises since it uses the reagent of colorimetric analytical item which does not cause absorption of the visible light spectrum. In addition, measuring the serum information lowers the processing capacity of the colorimetric analysis section. It is an object of the present invention to reduce the cost for serum information measurement without lowering the processing capacity.

To achieve the above-mentioned object, the present invention provides an automatic analyzer comprising a reaction vessel where a sample is mixed with a diluent; and an agitation mechanism to stir the sample-diluent mixture. The invention is characterized in that a solution prepared by mixing a sample with a diluent is measured in the colorimetric analysis section before the solution is supplied to the electrolyte analysis section for electrolyte analysis.

According to the present invention, since the colorimetric analysis section can perform serum information measurement and the like by using a diluted sample prepared for electrolyte measurement, it is possible to reduce the running cost of the colorimetric analysis section and raise the processing capacity.

BRIEF DESCRIPTION OF THE DRAWINGS

Fig. 1 shows an automatic analyzer according to an embodiment of the present invention;
Fig. 2 shows the flowchart of a process for analyzing an electrolyte and measuring serum information performed by the automatic analyzer of the present invention; and

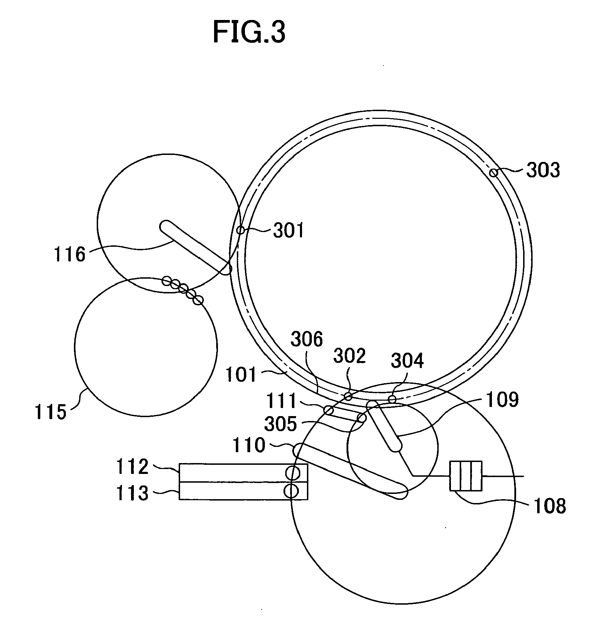

Fig. 3 schematically shows the automatic analyzer of the present invention.

DETAILED DESCRIPTION OF THE PREFERRED EMBODIMENTS

The following will describe an embodiment of the present invention with reference to the drawings.

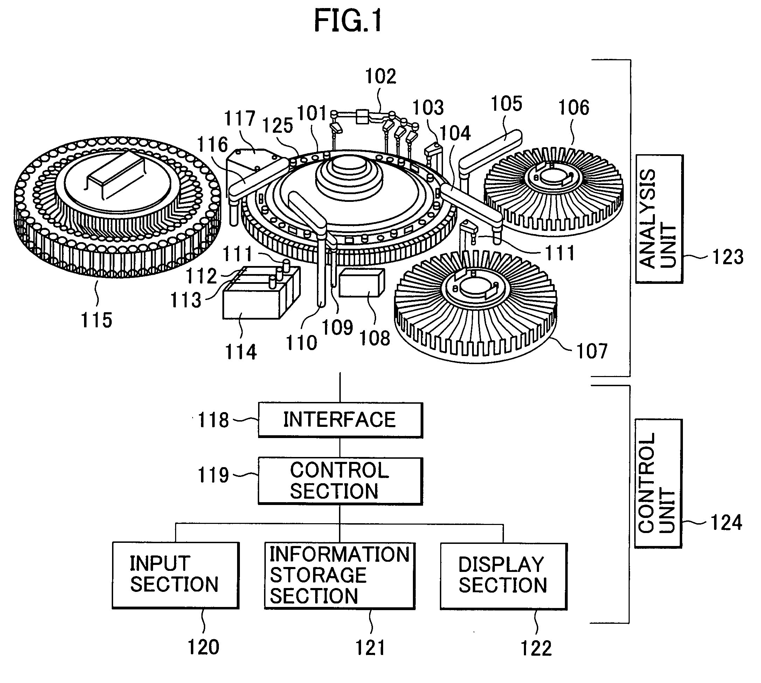

Fig. 1 illustrates an automatic analyzer according to an embodiment of the present invention. As a whole, the automatic analyzer comprises an analysis unit 123 and a control unit 124. Its colorimetric analysis section has: a sample disk 115 as a sample feed device which holds a plurality of sample vessels and moves so as to locate each sample vessel to a sample aspiration position; reagent disks 106 and 107 as reagent feed devices each of which holds a plurality of reagent vessels for the respective pertinent analyses and moves so as to locate each reagent vessel to a reagent aspiration position; a reaction vessel 101 for reacting a sample with a reagent therein; a reaction disk 125 functioning as a reaction line having a plurality of reaction vessels 101 arranged circularly thereon; a pipetting mechanism 116 for dispensing a sample to reaction vessels 101; reagent pipetting mechanisms 104 and 105 for dispensing reagents to reaction vessels respectively; an agitation mechanism 103 for agitating and mixing a dispensed sample with a dispensed reagent; a multi-wavelength photometer 117 for measuring optical absorptions of reaction liquid in a reaction vessel 101; and a cleaning mechanism 102 installed along the reaction disk 125 to clean the reaction vessels 101. A control section 119 controls the action of each mechanism and the display of the screen.
The reaction disk 125 is controlled so as to repeat a cyclic operation. In the cyclic operation, the reaction vessel row is rotated by a certain number of reaction vessels and then stopped. The multi-wavelength photometer 117 has a plurality of sensors which are respectively placed so as to detect the corresponding wavelengths. While the reaction disk 125 is rotating, the multi-wavelength photometer 117 detects the light which has passed through the content of a reaction vessel.
The electrolyte analysis section comprises a reference solution tank 112; a diluent tank 113; a comparison electrode solution tank 114; an electrolytic analysis pipetting mechanism 110 for dispensing a reagent for measuring electrolytes; a sipper mechanism 109 for aspirating a diluted sample (from a reaction vessel 101) and the reference solution; and an electrolyte measurement section 108 for performing electrolyte analysis.
The following describes how the automatic analyzer operates to perform colorimetric analysis/measurement. If an analysis operation start switch disposed on the interface 118 is pressed, the reaction vessel cleaning mechanism 102 begins to clean a reaction vessel 101 and then water blank measurement is performed. The value obtained by this water blank measurement will be used as the reference in the subsequent optical absorption measurement to be done with the reaction vessel 101. After the cyclic operation of moving the reaction disk 125 by a certain distance and then stopping it is repeated until the cleaned reaction vessel arrives at a sample dispensing position 301, a sample vessel moves to the sample dispensing position 301. The two reagent disks 106 and 107 are simultaneously moved so as to locate the respective pertinent analytical reagents to their reagent pipetting positions. Then, the sample pipetting mechanism 116 is operated to aspirate the sample from the sample vessel and then discharge a predetermined amount of the sample into the reaction vessel 101. Simultaneously, the reagent pipetting mechanism 104 begins to operate to aspirate the reagent from the reagent vessel mounted on the reagent disk 106.
Then, this reagent pipetting mechanism 104 moves to the pertinent reaction vessel 101 on the reaction disk 125 and discharges the aspirated predetermined amount of the reagent into it. Then, the reagent pipetting mechanism 104 becomes ready for the subsequent reagent dispensation after it is made clean by the cleaning mechanism (not shown in the figure). After the reagent is dispensed by the reagent pipetting mechanism 104, the multi-wavelength photometer starts measurement. The measurement is performed when the reaction vessel 101 crosses a light flux during rotation of the reaction disk 125. After the reagent is added, the reaction vessel 101 moves to an agitation position 303 where the sample is agitated with the reagent by the agitation mechanism 103. Then, the reagent is added into the reaction vessel 101 by the reagent pitting mechanism 105, and the mixture is agitated by the agitation mechanism 111. The reaction vessel 101 successively crosses the light flux due to the rotation of the reaction disk 125. Each time the reaction vessel 101 crosses the light flux, adsorption of light is measured. After the completion of the measurement, the reaction vessel 101 is made clean by the reaction vessel cleaning mechanism 102 in preparation for measurement of another sample. From the measured optical absorptions, concentrations or enzyme activity values are calculated. The analysis result is indicated by the display section 122.
The following describes how the automatic analyzer operates to measure/analyze electrolytes in a sample. After a sample is discharged into a reaction vessel 101 in the same manner as for colorimetric analysis/measurement, the electrolytic analysis pipetting mechanism 110 aspirates a diluent from the diluent tank 113 and dispenses the diluent into the reaction vessel 101 when the reaction vessel 101 with the sample dispensed is placed at a diluent discharge position 302. Then, when the reaction vessel 101 is moved to a position 303, the diluted sample is stirred by the agitation mechanism 103. After that, the reaction vessel moves to a position 304 where the sipper mechanism 109 faces the reaction vessel and aspirates the diluted sample from the reaction vessel into the electrolyte measurement section 108. Then, the voltage level is measured.

A control system comprises a control section 119; an input section 120 for inputting information; an information storage section 121 for storing the information; and a display section 122 for displaying measured data. In addition, the control system controls the colorimetric analysis section and electrolyte analysis section via an interface 118.

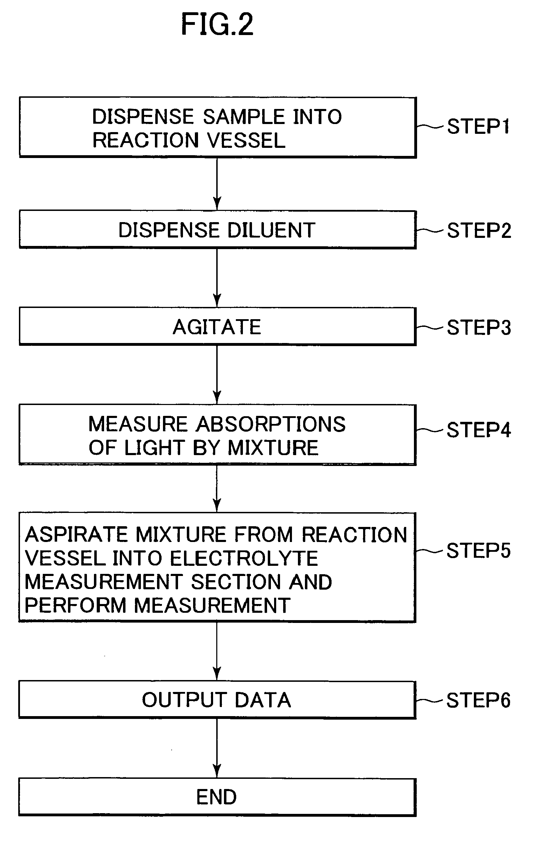

Fig. 2 shows a flowchart which is followed by an automatic analyzer according to the present invention when serum information is measured by the colorimetric analysis section for analysis.

In actual measurement, a sample to be analyzed is dispensed into a reaction vessel 101 by the sample pipetting mechanism 116 when the vessel is at the sample dispensation position 301 (STEP 1). Then, the electrolytic analysis pipetting mechanism 110 sips a diluent from the diluent tank 113 and dispenses it into the reaction vessel 101 when the vessel is at the diluent discharge position 302 (STEP2). Then, after the vessel is moved to the position 303, the diluted sample is stirred by the agitation mechanism 103 (STEP 3). The reaction disk 125 is rotated periodically to move the reaction vessel 101 to the position 304. Each time such a reaction vessel 101 passes the photometer 117, optical absorptions by the diluted sample are measured (STEP4). To measure the degrees of hemolysis, lipemia and icterus, optical adsorptions are examined at wavelengths 480 nm, 505 nm, 570 nm, 600 nm, 660 nm and 700 nm. The degrees of hemolysis, lipemia and icterus are calculated by the following formula:

$$\text{Hemolysis Hb} = (\Delta EH - /A) - (\Delta EL - /B) - C$$

$$\text{Lipemia L} = (\Delta EL/D) - E$$

$$\text{Icterus I} = (\Delta EI/E) - (\Delta EH/F) - (\Delta EL/G) - H$$

$\Delta$ EH: Optical absorption difference between 570 nm and 600 nm

$\Delta$ EL: Optical absorption difference between 660 nm and 700 nm

$\Delta$ EI: Optical absorption difference between 480 nm and 505 nm

A, B, C, D, E, F, G, H: Correction coefficient

Settings of the correction coefficients A, B, C, D, E, F, G and H can easily be changed. The hemolysis, lipemia and icterus judgment thresholds may be set freely.

Then, the reaction vessel moves to the position 304 where the sipper mechanism 109 faces the reaction vessel and aspirates the diluted sample from the reaction vessel into the electrolyte measurement section 108. The voltage level is measured (STEP 5).

From the optical absorptions and voltage level obtained in STEP4 and STEPS, serum information and electrolyte concentrations are respectively output and displayed by the display section 122 (STEP6).

The measurement of serum information may be performed if electrolyte or serum information measurement is requested for the sample via the interface 118. Also, the measurement may be performed on any sample regardless of whether or not the measurement is requested.

Further, the diluent used for the electrolyte measurement section may be a reagent which can be used in the colorimetric analysis section to measure another substance.

## Claims

1. An automatic analyzer comprising:

a colorimetric analysis section provided with a reaction vessel to mix a sample with a reagent and a measurement section to measure the color change of the mixture in the reaction vessel; and
an electrolyte measurement section to measure the concentrations of electrolytes in a sample;

wherein the sample included in the reaction vessel is diluted to be measured in the measurement section of the colorimetric analysis section, and at least one of the degrees of hemolysis, lipemia and icterus in a sample is measured in the electrolyte measurement section.

2. An automatic analyzer according to Claim 1 wherein,
a diluent used in the colorimetric analysis section to dilute the sample in the reaction vessel is a reagent which is used for colorimetric analysis or measurement.

FIG.1

ANALYSIS UNIT 123

CONTROL UNIT 124

INTERFACE 118

CONTROL SECTION 119

INPUT SECTION 120

INFORMATION STORAGE SECTION 121

DISPLAY SECTION 122

# FIG.2

DISPENSE SAMPLE INTO REACTION VESSEL — STEP1

DISPENSE DILUENT — STEP2

AGITATE — STEP3

MEASURE ABSORPTIONS OF LIGHT BY MIXTURE — STEP4

ASPIRATE MIXTURE FROM REACTION VESSEL INTO ELECTROLYTE MEASUREMENT SECTION AND PERFORM MEASUREMENT — STEP5

OUTPUT DATA — STEP6

END

# FIG.3

**EP 1 835 292 A1**

European Patent Office

**EUROPEAN SEARCH REPORT**

Application Number

EP 07 00 4046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 60 052761 A (OLYMPUS OPTICAL CO) 26 March 1985 (1985-03-26) * abstract * ----- | 1,2 | INV. G01N35/02 G01N33/48 |
| Y,D | JP 06 130070 A (HITACHI LTD) 13 May 1994 (1994-05-13) * abstract * ----- | 1,2 | |
| Y | JP 07 280814 A (HITACHI LTD) 27 October 1995 (1995-10-27) * abstract * ----- | 1,2 | |
| | | | TECHNICAL FIELDS SEARCHED (IPC) |
| | | | G01N |

The present search report has been drawn up for all claims

| Place of search | Date of completion of the search | Examiner |
|---|---|---|
| Munich | 6 July 2007 | Runser, Claude |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 4046

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2007

| Patent document cited in search report | | Publication date | Patent family member(s) | | Publication date |
|---|---|---|---|---|---|
| JP 60052761 | A | 26-03-1985 | JP | 1803759 C | 26-11-1993 |
| | | | JP | 5010618 B | 10-02-1993 |
| JP 6130070 | A | 13-05-1994 | NONE | | |
| JP 7280814 | A | 27-10-1995 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6130070 A